## Europäisches Patentamt

(19) **European Patent Office**

**Office européen des brevets**

(11) Publication number: **0 263 723 B1**

# EUROPEAN PATENT SPECIFICATION

(45) Date of publication of patent specification :
27.02.91 Bulletin 91/09

(51) Int. Cl.⁵ : **C04B 16/02, C04B 18/24**

(21) Application number : **87310488.9**

(22) Date of filing : **27.11.87**

(54) A process for manufacture of fibre-reinforced shaped articles.

The file contains technical information submitted after the application was filed and not included in this specification

(30) Priority : **28.11.86 DK 5729/86**

(43) Date of publication of application :
**13.04.88 Bulletin 88/15**

(45) Publication of the grant of the patent :
**27.02.91 Bulletin 91/09**

(84) Designated Contracting States :
**AT BE CH DE ES FR GB GR IT LI LU NL SE**

(56) References cited :
**EP-A- 0 068 742**
**EP-A- 0 127 960**
**DE-A- 2 620 865**

(73) Proprietor : **Dansk Eternit-Fabrik A/S**
**Sohngardsholmsvej 2**
**DK-9100 Aalborg (DK)**

(72) Inventor : **Gregersen, Jens Christian**
**P.O. Box 763**
**DK-9100 Aalborg (DK)**
Inventor : **Nielsen, Rasmus Stig**
**P.O. Box 763**
**DK-9100 Aalborg (DK)**

(74) Representative : **Robinson, Anthony John**
**Metcalf et al**
**Kilburn & Strode 30 John Street**
**London, WC1N 2DD (GB)**

## Description

The present invention relates to a process for the manufacture of asbestos-free fibre-reinforced shaped articles having a density of at least 1000 kg/m$^3$ with a matrix of a cured inorganic binder, in which green shaped articles are formed by dewatering an aqueous slurry of fibres and a matrix forming material comprising particles of an inorganic hydraulic binder, a particulate inorganic additive and possibly other additives containing an excess of water in relation to the amount necessary to secure curing of the hydraulic binder, and containing, on a dry weight basis, 3-20%, preferably 5-20%, in particular 7-15%, cellulose fibres, after which the green shaped articles are cured.

Various processes of this kind are known in connection with the above procedure. Hereby the curing of the green shaped articles, which may be pressed or unpressed, may take place at atmospheric pressure, e.g. at temperatures between about 20 and 100°C, or by autoclaving, i.e. heat treatment in the presence of saturated steam at super-atmospheric pressure.

"Pressed shaped articles" are products, during the manufacture of which the green shaped articles are compressed in an additional compression step, typically at a compression pressure of approx. 10 MPa. "Unpressed shaped articles" are shaped articles which have not been subjected to such an additional compression step.

The known autoclaved and unautoclaved products have typically a modulus of rupture, MOR, of at least 8 MPa, e.g. 8-16 MPa and are well-suited as building materials, e.g such as flat or corrugated sheets and panels used for roofing and interior and exterior cladding of buildings.

Numerous processes of this kind are known in connection with the manufacture of unautoclaved products.

For example US patent specification No. 4 261 754 describes the manufacture of building materials reinforced with special polyolefine-fibres and possibly cellulose fibres, by which, if desired, an inorganic fine grained additive may be added, i.a. to provide improved plasticity and fibre dispersion during the manufacture of the green sheets. Typical MOR values for such unautoclaved polyolefine-fibre-reinforced sheets are about 6 MPa.

Danish patent specification No. 4926/78 describes an improved solution to the problem of providing fine fibre dispersion, which is obtained by intensive mechanical treatment of the fibre-containing slurry prior to dewatering same. It also describes the use of a fine filler, such as ultra fine silica dust, hereinafter "UFS", having a specific surface area of 5-200 m$^2$/g and an average particle diameter less than about 0.5 μm dosed in an amount of as much as 10%, typically 2-5%, in particular 3.5%, in connection with the manufacture of unautoclaved fibre-reinforced sheets with a typical MOR of about 10 MPa. Here and in the following all percentages are calculated by weight unless otherwise indicated.

It was later discovered that the said intensive treatment could be avoided, if, during the manufacture of the initially prepared aqueous fibre slurry, colloidal hydrophilic particles are used as dispersion agent, e.g. special colloidal silica- and/or clay particles, such as Aerosil 200 and Ludox HS40, in amounts of approx. 2%. Typical cellulose fiber-dosages are 2-3%, typical binding agents are Portland cement and pozzolanic cements, e.g. containing up to 12% of the above UFS as pozzolan. This technique is described in EP patent specification No. 47 158, but exclusively in connection with the manufacture of unautoclaved sheet products. Hereby are obtained products with considerably improved strength properties. e.g. typical MOR values of 12-18 MPa at densities of about 1600 kg/m$^3$.

Addition of plastifying agents in the form of colloidal silica- and/or clay particles, such as Cabosil or bentonite, in amounts of 5-10% when manufacturing both unautoclaved and autoclaved sheets with high density and containing at least 5% cellulose fibres is known from GB patent specification No. 2 045 306. A typical recipe for flat sheets is e.g. 84.5% Portland cement, 10.9% cotton fibres, 0.5% nylon fibres and 5.0% plastifying agent, such as colloidal silica, thus producing products with MOR values of about 19.5 MPa at a density of about 1450 kg/m$^3$.

GB patent specification No. 2 048 330 and EP patent specification No. 68 742 e.g. describe the use of the above UFS as pozzolan in the manufacture of unautoclaved sheets. The latter specification concerns the manufacture of e.g. flat or corrugated, preferably pressed, cellulose fibre-reinforced sheets, typically having the following composition : 8% cotton fibres, 67% Portland cement and 25% UFS. After curing for 24 h at 80°C and for 2 weeks at room temperature pressed products are obtained having MOR values of about 16 MPa at a density of about 1500 kg/m$^3$.

Finally numerous variants of the process described in the introduction are known in connection with the manufacture of autoclaved products.

It is a characteristic common feature of these methods that the aqueous slurry contains three main components : A fibre component, a lime component and an acid silica component, the acidity of the latter usually

2

only manifesting itself under the reaction conditions prevailing during the autoclaving process. Additionally various additives can be used, i.a. plastifying agents in the form of colloidal silica- and/or clay particles, such as Cabosil, Ludox and bentonite. Known lime components include Portland cement, hydrated lime and mixtures thereof. Known acid silica components reacting during the autoclaving with the lime component under formation of calcium silicate hydrates include ground quartz, silica sand, diatomite and/or fly ash having a fineness corresponding to that of Portland cement.

A significant difference between autoclaved and unautoclaved products resides in the different chemical and crystalline nature of the cured binders. Whereas the unautoclaved, cured binders mainly consist of amorphous calcium silicate hydrates with fairly varying stoichiometry and containing free lime, the autoclaved products mainly consist of semi-, mainly extremely fine-crystalline tobermorite-like structures with less varying stoichiometry, containing practically no free lime. The chemical and morphological structure of the autoclaved matrixes is, however, a complex function of a number of factors, including the nature of the starting materials and the reaction conditions before and during the autoclaving. Due to i.a.the more crystalline nature of the matrixes the autoclaved products often exhibit improved weather resistance, reduced moisture movements and reduced moisture permeability compared with the corresponding properties of the unautoclaved products.

A typical example of a fibre-reinforced autoclaved product is described in US patent specification No. 3 501 323, which mentions a typical mixture of 15% asbestos fibres, 51% Portland cement and 34% ground sand (as silica). A free flowing aqueous slurry is prepared from this mixture, whereafter green sheets are prepared by dewatering said slurry. These sheets are pressed and autoclaved, typically at 170°C for 8 hours.

Similar processes using hydrated lime, Portland cement or mixtures thereof, ground quartz, silica sand, diatomite or fly ash as silica, preferably having a specific surface area within the range 3000-5000 cm$^2$/g, and fibres of asbestos, silica, glass, cellulose and/or organic polymers, are also mentioned in US patent specification No. 3 501 323.

Another process of the same kind for the production of asbestos-free products, using e.g. 12% cellulose fibres, 15% Portland cement, 31.8% hydrated lime, 29.2% ground quartz and 12% mica is known from US specification No. 4 101 335. This product has a typical density of 750 kg/m$^3$ and a MOR of 13.5 MPa.

Autoclaved products of this kind are also described on page 5 of Danish patent specification No. 3679/80, e.g. containing 3% cellulose fibres, 9% hydrated lime, 40% fly ash, approx. 30% Portland cement, 12% Wollastonite crystals and 5% dispersion agent in the form of a clay slurry. This product has a density of approx 1300 kg/m$^3$ and a MOR of about 7 MPa.

Autoclaved cellulose fibre-reinforced products are further described in the following specifications :

GB patent specification No. 1 421 556 describing the manufacture of autoclaved products, e.g. on the basis of raw mixtures with the recipe 36.2% Portland cement, 39.1% diatomite, 5% cellulose fibres, 12.2% glass fibres and 7.5% perlite having a MOR of 4.7 MPa at a density of 640 kg/m$^3$ ;

US patent specification No. 4 040 851 describing the manufacture of autoclaved products, e.g. on the basis of raw mixtures with the recipe 50.1% Portland cement, 18.6% diatomite, 6.2% cellulose fibres and various additives having a MOR of about 9 MPa at a density of 930 kg/m$^3$, and a corresponding product with ground quartz instead of diatomite having a MOR of about 21 MPa at a density of 1600 kg/m$^3$ ; and

US patent specification No. 4 132 555 describing the manufacture of autoclaved products, e.g. on the basis of raw mixtures with the recipe 10% Portland cement, 42% hydrated lime, 38% ground quartz and 10% cellulose fibres having a MOR of 10.6 MPa at a density of 755 kg/m$^3$.

As previously mentioned, the use of plastifying agents in the form of colloidal silica- and/or clay particles, such as Cabosil, Gasil, Neosyl and bentonite, is also known in connection with the manufacture of autoclaved products, e.g. from GB patent specification No. 2 045 306, which e.g. mentions the manufacture of autoclaved products on the basis of raw mixtures with the recipe 41% Portland cement, 44% ground quartz, 4% cotton cellulose fibres, 2% other fibres and 9% bentonite having a MOR of 18.5 MPa at a density of 1400 kg/m$^3$, and with the recipe 46% hydrated lime, 41.5% ground quartz, 4% cellulose fibres, 5.5% other fibres and 3% bentonite having a MOR of 16.5 MPa at a density of 1350 kg/m$^3$.

Another process of the same kind using 40-60% cement, 30-40% ground quartz and 5-15% cellulose fibres and possibly plastifying agents of the same kind, e.g. colloidal silica, which may partly replace the quartz, e.g. approx. 25% quartz and 10% colloidal silica dispersion agent, is also known from the specification of EP patent specification No. 68 741. Hereby pressed sheets having a density of about 1550 kg/m$^3$ and MOR values of 16-18 MPa may be produced.

Finally, EP patent specification No. 127 960 describes the manufacture of autoclaved fibre-reinforced shaped articles having a density of at least 600 kg/m$^3$ with a matrix of cured calcium silicate binder by a process, comprising the steps of initially preparing an aqueous slurry of fibres, containing at least 5% cellulose fibres calculated on the total solid content, silica, lime and/or lime-containing material, such as Portland cement, and possibly plastifying agents in the form of colloidal silica- and/or clay particles and other additives and containing an excess of water in relation to the amount necessary to secure curing of the calcium silicate binder, subsequently forming green shaped articles by dewatering the slurry, and finally autoclaving the green shaped articles, possibly after pressing and precuring. According to this process the aqueous slurry, calculated on a dry weight basis contains

5-30%, preferably 8-20%, in particular 12-16% fibres, preferably at least 8% cellulose fibres,

15-50%, preferably 18-35%, in particular 18-25% silica in the form of ultra fine silica dust with a specific surface area of 5-200 $m^2/g$, and a particle average diameter less than about 0.5 µm,

20-80%, preferably 30-70%, in particular 45-65% lime and/or lime-containing material, such as Portland cement and

0-40% additives.

The shaped articles formed by this process exhibit particularly high strengths relative to their density. It is however, a characteristic feature of these and the other products mentioned above that there is a significant difference in the densities as well as in the MOR values of unpressed and pressed products, respectively. As a rule, superior strength properties are only obtained when the products are manufactured by processes comprising presssing of the green sheets in an additional compression step, typically at a pressure of about 10 MPa. This is probably due partly to the more compact character of the matrix of the pressed products, which not only per se possess a higher MOR, but also provides improved fibre anchoring compared with the fibre anchoring obtained with the more porous matrix obtained in an unpressed sheet.

However, the necessity of such an additional sheet compression step in the manufacturing of sheets represents a considerable inconvenience, partly for reasons of investment, partly because it complicates the manufacturing process, particularly when corrugated sheets are produced.

Another disadvantage of the known art consists in that the MOR value of water saturated cellulose fibre-reinforced sheets normally amounts to only about 60% of the value for dry sheets. Probably, this reduced strength of wet sheets in relation to dry sheets is due to reduced fibre anchoring in the wet matrix as compared with a dry matrix.

The object of the present invention consists in providing a process of the above kind for the manufacture of products, such as flat or corrugated panels or sheets, e.g. used for roofing, interior and exterior cladding of buildings, and as interior building elements in ships, and pipes, in which the above disadvantages are eliminated and in which the green shaped articles exhibit extremely fine mouldability and plasticity.

It has surprisingly been found that the object can be achieved by a process of the kind described in the introductory part of this specification, characterized in that the matrix forming material comprises, on a dry weight basis,

40-90%, preferably 45-85%, of a coarse material with an average particle size of 35-12 µm, preferably 25-18 µm, preferably with a particle size distribution exhibiting only one maximum, comprising the hydraulic binder and possibly a silica- or silicate-containing, preferably pozzolanic active additive,

5-45%, preferably 10-40%, in particular 10-35%, of a fine inorganic, preferably silica- or silicate-containing, in particular pozzolanic active additive with an average particle size of 10-1 µm, preferably 7-3 µm, preferably with a particle size distribution exhibiting only one maximum,

3-25% of an ultra fine preferably pozzolanic active additive with an average particle size within the range 1-0.02 µm, preferably less than 0.5 µm, and

0-30% other additives.

The unpressed products formed by the process according to the invention thus exhibit values for density and MOR, which previously could only be obtained for pressed products. Furthermore, the difference between the MOR value in wet and dry state is surprisingly small for products manufactured according to the invention. This advantage is particularly important in connection with the manufacture of pipes.

As in the known art, the matrix forming material comprises an ultra fine additive with a particle size which mainly lies within the range 1 µm to 0.02 µm, and a main fraction comprising hydraulic binder and additive with a particle size which mainly lies within the range 50 µm to 1 µm. According to the known art, the dominating amount of the main fraction (calculated on a weight basis) is in the 50-10 µm-fraction. For as well Portland cement, as ordinary unground fly ash and ground quartz the weight ratio between the 50-10-µm-fraction and the 10-1 µm-fraction, hereinafter referred to as the "F-ratio", is thus larger than 1.0, typical values are larger than 1.2.

It is a characteristic feature of the matrix forming material according to the invention that its F-ratio is smaller than the F-ratio according to the known art, due to the addition of the fine additive having an average particle size of 10-1 µm, and an F-ratio less than 1.0.

This is believed to result in a more close and compact packing of the matrix-material in the dewatered product, accounting for the fact that the present products exhibit not only higher density but also higher MOR

4

values, probably as a result of improved inherent matrix strength and improved fibre anchoring in the matrix.

Furthermore, the green shaped articles manufactured by the process according to the invention exhibit excellent plasticity, handabiliby and shapabilty which are particularly advantageous in connection with the manufacture of corrugated sheets and hand-moulded goods.

By the process according to the invention it is possible to manufacture unpressed flat sheets with typical dry MOR values, viz. BT-max. dry (defined below), of 19-35 MPa at densities of 1200-1450 kg/m$^3$. Typically, the wet MOR values are at the most 10% smaller than the corresponding dry values.

The process according to the invention may be carried out on both Hatschek and Magnani Machines in connection with preparation of in particular unpressed but if desired also pressed sheets, and on Mazza and Magnani Machines in connection with preparation of pipes.

The curing of the green shaped articles may take place at atmospheric pressure, e.g. at temperatures between about 20 and 100 °C, or by autoclaving.

When manufacturing unautoclaved materials the total amount of fine and ultra fine material preferably constitutes less than 35%, calculated on the the total solid content in the slurry, and the coarse material preferably consists exclusively of the hydraulic binder.

According to a preferred embodiment of the process according to the invention, the dewatering step is carried out on a Hatschek Machine and the green shaped articles are cured by autoclaving. In this case the matrix forming material may comprise, on a dry weight basis,
40-75%, preferably 40-55%, in particular 45-50% of the coarse material,
10-45%, preferably 15-40%, in particular 20-30% of the fine additive,
3-25%, preferably 10-25%, in particular 14-22% of the ultra fine additive, and
0-30% other additives.

According to another preferred embodiment of the process according to the invention, the dewatering step is carried out on a Magnani Machine and the green shaped articles are cured by autoclaving. In this case the matrix forming material may comprise, on a dry weight basis,
40-75%, preferably 40-60%, in particular 45-55% of the coarse material,
10-45%, preferably 15-40, in particular 25-35% of the fine additive,
3-25%, preferably 3-20%, in particular 5-15% of the ultra fine additive, and
0-30% other additives.

According to another preferred embodiment of the process according to the invention, the dewatering step is carried out on a Hatschek Machine or a Magnani Machine and the green shaped articles are cured at atmospheric pressure. In this case the matrix forming material may comprise, on a dry weight basis,
50-90%, preferably 60-90%, in particular 65-85% of the coarse material,
5-35%, preferably 10-30%, in particular 10-20% of the fine additive,
3-25%, preferably 5-20%, in particular 5-15% of the ultra fine additive, and
0-30% other additives.

According to preferred embodiments of the process according to the invention
the 50-1-µm-fraction of the coarse material constitutes at least 80% by weight of said material, and the weight ratio of the 50-10-µm-fraction to the 10-1-µm-fraction of this material is larger than 1.0, preferably larger than 1.2,
the 50-1-µm-fraction of the fine additive constitutes at least 80% by weight of said material, and the weight ratio of the 50-10-µm-fraction to the 10-1-µm-fraction of this material is less than 1.0, preferably less than 0.8,
at least 80% by weight of the ultra fine additive has a particle size within the range 0.5-0.02 µm.

The hydraulic binder is preferably Portland cement, e.g. of the type I-V, according to ASTM standard C 150, preferably having a Blaine-value lower than 2500 cm$^2$/g.

The coarse material may comprise more than one type of coarse material with an average particle size of 35-12 µm, e.g. a mixture of Portland cement and silica- or silicate-containing, preferably pozzolanic active additives, such as unground fly ash and/or possibly ground quartz, with a weight ratio Portland cement/additive larger than 1, preferably larger than 1.2.

According to a preferred embodiment of the process according to the invention the fine additive is ground fly ash, possibly ground, possibly calcined moler, ground quartz, kieselgur, rice husk ash, calcium carbonate or Wollastonite.

The ultra fine additive is preferably fine filter dust from electrothermal production of silicon or ferrosilicon with a specific surface area of about 25 m$^2$/g and an average particle diameter of about 0.1 µm.

Preferred fibres are : synthetic inorganic fibres, such as mineral wool, glass, carbon and steel fibres ; synthetic organic fibres, such as polyester, polyvinyl, polyvinylalcohol, polyethylene, polypropylene, polyacrylonitrile and polyacrylamide fibres ; and/or natural organic fibres, such as cellulose fibres.

As mentioned above, the aqueous slurry contains 3-20 weight-%, preferably 5-20 weight-%, in particular 7-15 weight-%, calculated on a dry weight basis, cellulose fibres. Preferred cellulose fibres are selected from : wood fibres of e.g. birch, eucalyptus, pine and spruce ; seed and fruit hair fibres of e.g. coir and cotton; and leaf and/or bast fibres of e.g. sisal, abaca, flax, hemp and jute.

The fibres serve partly to reinforce the cured product, partly as filtration and retention aids at the dewatering step.

Particularly satisfactory filtration and retention are obtained when at least a part of the cellulose fibres is refined to a degree of fineness of 20-60° Schopper Riegler, and/or when the fibres include highly fibrillated polyethylene or polypropylene fibres.

According to a preferred embodiment the fibres are exclusively cellulose fibres.

As mentioned above the matrix forming material may comprise 0-30% other additives. These may be selected from : fillers, such as mica, vermiculite, perlite and expanded clay ; colouring agents, water sealing agents, setting and hardening accelerators, such as calcium chloride and aluminium sulphate, flocculants or dispersants, filtering aids, such as acicular Wollastonite crystals, and organic or inorganic plastifying and fibre dispersion agents, such as hydrophilic inorganic particles, i.a. colloidal silica particles and refined or unrefined colloidal clay particles with a dominating particle fraction less than 0.02 μm.

The autoclaving is preferably performed at temperatures between 100 and 240°C, in particular within the interval 130-190°C.

The aqueous slurry can be prepared in a manner known per se by pulping and stirring the fibres in water and subsequently admixing the remaining materials, possibly adding more water to reach a suitable water/solid ratio.

When using ultra fine silica as ultra fine additive it has, however, been found particularly advantageous initially to disperse the ultra-fine silica in water having a pH-value exceeding 8, subsequently stirring the fibres in this aqueous silica dispersion and finally admixing the remaining materials and, if necessary, additional water. Hereby is ensured a particularly homogeneous slurry of the fibres with a reduced tendency to lump formation, presumably because the ultra fine silica dust in a basic environment will coat the surface of the individual cellulose fibres, providing an increased dispersibility of the cellulose fibres.

The preparation of the green shaped articles by dewatering the slurry takes place in a manner known per se, e.g. using the Hatschek, Magnani, Mazza, Head Box, flow on, injection or Fourdrinier method.

The green shaped articles can, for example, be shaped as beams, blocks, pipes and flat or corrugated sheets and panels which, if desired, can be subjected to compression in an additional compression step, typically at a pressure of 1-10 MPa. When manufacturing autoclaved products the green shaped articles are preferably subjected to a precuring step, typically at 20-100°C for 6-24 hours and a relative humidity of 60-100%, before the autoclaving step.

The invention is further illustrated in the Examples.

The materials used in the examples were as follows :

Fibres :

EO cellulose :
Bleached cellulose fibres (Eucalyptus grandis and Eucalyptus urophylla) having a dewatering resistance of about 20° SR, length : about 1.0 mm, diameter : about 15 μm.
Sandarne K :
Unbleached cellulose fibres (Pinus) (Kraft cellulose),
length : less than 4 mm,
diameter : about 35 μm having a dewatering resistance of about 14° SR.
Sandarne K, x° SR :
Sandarne K refined to a dewatering resistance of x° SR ; x = 20, 21, 23.
Stora 32 :
Bleached cellulose fibres (Pinus) (Kraft cellulose),
length : less than 4 mm,
diameter : about 35 μm having a dewatering resistance of about 14° SR.
Stora 32, 40° SR :
Stora 32 refined to a dewatering resistance of 40° SR.

### Hydraulic binder :

LSC cement :
A sulphate-resistant Portland cement having a low alkali content (max. 0.60%) (type V), specific surface (Blaine) : 2300 cm²/g, $C_3A$-content : about 1.5%, F-value : about 2.2, average particle size : about 20 µm.
Rapid cement :
An ordinary Portland cement (type III), specific surface (Blaine) : 4880 cm²/g, $C_3A$-content : about 10%, value : about 1.4, average particle size : about 13 µm.

### Additives :

Ground $SiO_2$ :
Silica sand containing at least 90% $SiO_2$, specific surface (Blaine) : about 4500 cm²/g, F-value : about 2.6, average particle size : about 20 µm.
Fly ash (unground) :
Fly ash from power plant, specific surface (Blaine) : about 3500 cm²/g, F-value : about 1.5, average particle size : about 14 µm.

### Fine additive :

Ground fly ash 100, 300, 500, J and G, vide example 1 and table I.

### Ultra fine additive :

Silica dust :
Ultra fine silica dust from electrothermal production of metallic silicon or ferrosilicon, $SiO_2$-content : 80-100%, specific surface (BET) : about 25 m²/g, average particle diameter : about 0.1 µm.

Fibre reinforced sheets were prepared in the laboratory at bench scale and on Hatschek and Magnani Machines at full industrial scale.

### Bench scale experiments :

### Production Procedure :

### Pulp preparation :

A saturated solution (20°C) of $Ca(OH)_2$ and $CaSO_4$, $2H_2O$ in deionized water was prepared. A portion of this solution together with the desired amount of ultra fine silica were introduced into a British Pulp Evaluation Apparatus, and the silica was dispersed at 3000 r.p.m for 3 min. Then the fibres were added to the dispersion, and the mixture was pulped at 3000 r.p.m. for 15 min.

### Slurry preparation :

T he resulting fibre pulp along with an additional portion of the above saturated solution were transferred to the vessel of a Diaf mixer, and the slurry was prepared by adding the remaining components of the matrix forming material and optional additives in an amount corresponding to a weight ratio water to total solid material equal to 10 in thin slurry experiments and 3 in thick slurry experiments. The resulting mixture was stirred at 1000 r.p.m. for 6 min.

### Preparation of green sheets.

A portion of the slurry corresponding to 109 g solid material was dewatered in a filtration apparatus, suction pressure 200 mm Hg. The resulting filter cakes were pressed to green sheets in a Johns-Manville sheet forming press at a compression pressure of 1.5 MPa. The density of the green sheets corresponds to about the density of the unpressed sheets prepared on an industrial scale.

## Preparation of cured sheets :

### Procedure 1 (autoclaving) :

The green sheets were cured in the following way : The green sheets were placed on a glass plate and kept in a humidity box for 24 hours, relative humidity : about 95%, temperature 25°C. The sheets were then autoclaved with a pressurizing period of 2.5 hours, a full pressure period of 16 hours, and a depressurizing period of 2.5 hours.

### Procedure 2 (ordinary curing) :

The green sheets were cured in the following way : The green sheets were placed on a glass plate and kept in a humidity box for 24 hours, relative humidity : about 95%, temperature 25°C. Thereafter the sheets were submerged in water and cured at 20-25°C for 20 days.

### Procedure 3 (accelerated curing) :

The green sheets were cured in the following way : The green sheets were placed on a glass plate and kept in a humidity box for 24 hours, relative humidity : about 95%, temperature 25°C. Thereafter the sheets were submerged in water and cured at 20-25°C for 6 days, whereafter the sheets were cured under water for another 14 days at about 60°C.

The physical properties of the slurry and the cured sheets were measured as described below :

### Testing Procedure :

### Filtration time :

A portion of slurry corresponding to 109 g of solid material was dewatered in a filtration apparatus at a suction pressure equal to 200 mm Hg. A sudden drop in suction pressure indicates the end of the filtration period. The filtration time is defined as the period of time from start of suction to pressure drop.

### BT-max dry and wet :

The cured sheets were subjected to bending tests in which the curvature of the specimens was determined as a function of the load. A ZWICK 1454 testing machine with 4-point load with a support distance of 190 mm and a 35 mm arm of momentum was used. Force/deformation curves were registered. BT-max designates the bending stress at maximum load, also referred to above as "MOR" (modulus of rupture). "wet" designates that measurements were made on watersoaked sheets which had been submerged in water for 48 hours, and "dry" designates that measurements were made on sheets which had been dried at 110°C for 48 hours.

### Example 1.

### Preparation of ground fly ash.

Ground fly ash was ground to an increasing degree of fineness in a rotating laboratory mill with grinding bodies.

Fly ash with three degrees of fineness were produced, designated 100, 300 and 500, the respective specific power consumption being 100, 300 and 500 kWh/t.

Two additional types of ground fly ash were produced, designated J and G.

The grain size distribution of these five products, of the unground fly ash, of the cement and ground $SiO_2$ used in the following examples was determined by a sedigraph.

Grain size analysis and F- values for these materials are shown in table I.

## Example 2.

Comparison between sheets prepared according to the invention and sheets prepared according to the known art (autoclaved products).

Five series of experiments were performed with production of sheets according to the Production Procedure.

In experiments 1 and 3 sheets were produced according to the invention by the thick and thin slurry method, respectively. The green sheets were autoclaved at 160°C.

By way of comparison sheets were produced in experiments 2 and 4 according to the known art, using unground fly ash instead of ground fly ash, while in experiment 5 sheets were produced according to the thin slurry method, the ground fly ash being replaced by $SiO_2$ with an F-value higher than 1. The green sheets were pressed and autoclaved as in experiments 1 and 3.

Compositions, calculated in percent by weight of solid material, and test results are shown in Table II. Here and in the following "(C)" indicates that it is a comparative experiment.

It is evident that the sheets produced according to the invention exhibit highly improved strength properties and higher densities.

Furthermore, sheets were produced according to the invention, the green sheets being pressed not at 1.5 MPa, but at 10 MPa. These products exhibited densities between 1450 and 1600 kg/m³ and MOR values (wet) of about 35-37 MPa.

## Example 3

Use of ground fly ash with different degrees of fineness.

Four series of experiments were carried out with production of sheets according to the Production Procedure by the thin slurry method.

In experiments 6, 7 and 8 the ground fly ash 100, 300 and 500, respectively, was used. In experiment 9, which is a comparative experiment, the ground fly ash was replaced by unground fly ash. The working procedure was as in example 2.

Compositions, calculated in percent by weight of solid material, and test results are shown in Table III.

It is evident that the strength properties of the products increase with increasing fineness of the ground fly ash.

## Example 4

Comparison between the MOR of wet and dry sheets.

Four series of experiments were performed with production of sheets according to the thin slurry method as described in example 2.

Compositions, calculated in percent by weight of solid material, and test results are shown in Table IV.

It is evident that there is only a very little difference between the MOR values for wet and dry products. For autoclaved products belonging to the known art the ratio between the wet and dry strength typically lies within the range 0.55-0.75.

## Example 5

Comparison between sheets prepared according to the invention and sheets prepared according to the known art (thick slurry, ordinary and accelerated curing).

Two times six series of experiments were performed with production of sheets according to the thick slurry version of the Production Procedure. The green sheets were divided into two batches and cured according to Procedure 2 and 3, respectively.

In experiments 14, 16 and 18 the ground fly ash G was used. In experiments 15, 17 and 19, which are comparative experiments, the ground fly ash was replaced by unground fly ash.

Compositions, calculated in percent by weight of solid material, and test results are shown in Table V.

It is evident that the sheets produced according to the invention exhibit highly improved strength properties and higher densities.

## Example 6

Comparison between sheets prepared according to the invention and sheets prepared according to the known art (thin slurry, ordinary and accelerated curing).

Two times six series of experiments were performed with production of sheets according to the thin slurry version of the Production Procedure. The green sheets were divided into two batches and cured according to Procedure 2 and 3, respectively.

In experiments 20, 22 and 24 the ground fly ash G was used. In experiments 21, 23 and 25, which are comparative experiments, the ground fly ash was replaced by unground fly ash.

Compositions, calculated in percent by weight of solid material, and test results are shown in Table VI.

It is evident that the sheets produced according to the invention exhibit highly improved strength properties and higher densities.

## Industrial experiments.

## Example 7.

## Experiment on a full scale Hatschek machine.

## Experiment H1.

400 kg Sandarne K (incl. 10% water) were pulped for 15 min. with 9925 l water in a 10 m$^3$ Black Clawson pulper. The resulting pulp was refined to a degree of freeness of about 20° SR and transferred to a stock chest. Thereafter 10634 l pulp was pumped to a 26 m$^3$ Escher Wyss pulper and pulped for 15 min. with 10626 l water and 1250 kg EO (incl. 10% water). Thereafter 3400 l silica-mix (52 weight-% ultra fine silica dust, 48 weight-% water) were added and mixed for 3 minutes. The resulting pulp had a solid material content of 14.66 weight-%.

260 kg of this pulp were mixed with 56 kg LSC cement and 25 kg ground fly ash G and water in order to obtain a suitable water to solid material ratio.

The resulting slurry was in known manner processed into flat sheets on a Hatschek machine.

The flat sheets were subsequently processed into corrugated sheets in a conventional corrugation machine, partly producing corrugated sheets having a pitch of 177 mm and a height (i.e. distance from upper part of wave trough to upper part of wave crest) of 51 mm (sheet thickness 6 mm), partly corrugated sheets having a pitch of 130 mm and a height of 30 mm (sheet thickness 6 mm).

The corrugated sheets were cured in a curing channel at 60°C for about 8 hours and subsequently autoclaved at 160°C for 10 hours, preceded by a pressurizing period of about 2 hours and succeeded by a depressurizing period of about 2 hours. The green sheets exhibited exceptional plastic properties, as there was no evidence of formation of cracks or wrinkles or other deformations after the corrugation.

## Experiment H2

For comparison analogous sheets were prepared using the same working procedure as in experiment H1, the 25 kg ground fly ash G, however, being replaced by 25 kg unground fly ash.

## Experiment H3

In this experiment sheets were prepared according to the invention using the same working procedure as in experiment H1, however, with the exclusive use of Stora 32, which was refined to 40° SR.

Test coupons were cut from the sheets produced in Experiment H1, H2 and H3 with the pitch 177 mm, and BT-max wet values were measured on the test coupons with rupture perpendicular to the corrugations.

The results are shown in Table VII.

It is evident that the products produced in experiment H1 exhibit superior strength properties in relation to the properties of the products produced in experiment H2, and that the products produced by the process according to the invention (H1 and H3) both have a remarkably high strength level.

## Example 8

### Experiments on a full scale Magnani Machine

An aqueous slurry having a weight of 1222 g per l (corresponding to a water/solid ratio about 3) and containing 3 parts by weight Sandarne K, 22° SR, 9 parts by weight EO, 8 parts by weight silica dust, 30 parts by weight ground fly ash G, a nd 50 parts by weight LSC cement was prepared as described in Example 7.

The slurry was dewatered to corrugated sheets on a Magnani Machine (pitch : 172 mm, height : 48 mm, thickness : 6-8 mm). The unpressed sheets were precured and autoclaved as described in Example 7.

The products were tested by measuring density and MOR wet (watersoaked boards) in the machine direction :

Density 1100-1200 kg/m$^3$, MOR wet : 8.0 MPa.

It is evident that the present method is also usable in connection with the production of autoclaved sheets on a Magnani Machine.

## Table I

| | 90% < | | 50% < | | 10% < | | % in 50-10 μm | % in 10-1 μm | F-value |
|---|---|---|---|---|---|---|---|---|---|
| Fly ash (unground) | 44 μm | | 14 | μm | 4.4 μm | | 55 | 37 | 1.49 |
| Ground fly ash 100 | 37 μm | | 7.8 | μm | 2.2 μm | | 34 | 57 | 0.60 |
| Ground fly ash 300 | 40 μm | | 6.6 | μm | 1.4 μm | | 25 | 60 | 0.42 |
| Ground fly ash 500 | 25 μm | | 4.8 | μm | 1.1 μm | | 24 | 63 | 0.38 |
| Ground fly ash J | 30 μm | | 5.4 | μm | 1.0 μm | | 34 | 55 | 0.62 |
| Ground fly ash G | 20 μm | | 4.2 | μm | 1.0 μm | | 20 | 67 | 0.30 |
| Ground $SiO_2$ | 59 μm | | 20 | μm | 3.0 μm | | 63 | 24 | 2.63 |
| LSC cement (Blaine: 2300 $cm^2/g$) | 44 μm | | 20 | μm | 3.2 μm | | 65 | 30 | 2.17 |
| Rapid cement (Blaine: 4880 $cm^2/g$) | 33 μm | | 13 | μm | 2.2 μm | | 55 | 40 | 1.38 |

## Table II

| Experiment No. | 1 | 2 (C) |
|---|---|---|
| EO | 9 | 9 |
| Sandarne K, 23° SR | 3 | 3 |
| LSC cement | 47 | 47 |
| Fly ash (unground) | | 21 |
| Ground Fly ash J | 21 | |
| Silica dust | 20 | 20 |
| Filtration time (sec.) | 103 | 41 |
| Slurry type | TK | TK |
| Autoclaving temperature, °C | 160 | 160 |
| BT-max wet, MPa | 20.3 | 15.6 |
| Density, kg/m$^3$ | 1399 | 1284 |

TK: thick slurry

## Table II (continued)

| Experiment No. | 3 | 4 (C) | 5 (C) |
|---|---|---|---|
| EO | 9 | 9 | 9 |
| Sandarne K, 23° SR | 3 | 3 | 3 |
| LSC cement | 47 | 47 | 47 |
| Fly ash (unground) | | 21 | |
| Ground Fly ash J | 21 | | |
| Ground $SiO_2$ | | | 21 |
| Silica dust | 20 | 20 | 20 |
| Filtration time (sec.) | 205 | 125 | 133 |
| Slurry type | TN | TN | TN |
| Autoclaving temperature, °C | 160 | 160 | 160/180 |
| BT-max wet, MPa | 30.3 | 20.9 | 21.4/18.3 |
| Density, kg/m³ | 1377 | 1239 | 1275/1222 |

TN: thin slurry

## Table III

| Experiment No. | 6 | 7 | 8 | 9 (C) |
|---|---|---|---|---|
| EO | 9 | 9 | 9 | 9 |
| Sandarne K, 23° SR | 3 | 3 | 3 | 3 |
| LSC cement | 47 | 47 | 47 | 47 |
| Fly ash (unground) | | | | 21 |
| Ground Fly ash 100 | 21 | | | |
| Ground Fly ash 300 | | 21 | | |
| Ground Fly ash 500 | | | 21 | |
| Silica dust | 20 | 20 | 20 | 20 |
| Filtration time (sec.) | 185 | 203 | 190 | 125 |
| Curing | A | A | A | A |
| BT-max wet, MPa | 23.8 | 24.6 | 28.3 | 20.9 |
| Density, kg/m$^3$ | 1365 | 1367 | 1377 | 1239 |

A: Autoclaving at 160°C

## Table IV

| Experiment No. | 10 | 11 | 12 | 13 |
|---|---|---|---|---|
| EO | 9 | 10.5 | 9 | 9 |
| Sandarne K | | 1.5 | 3 | |
| Sandarne K, 23° SR | 3 | | | |
| Stora 32 | | | | 3 |
| LSC cement | 47 | 47 | 44 | 47 |
| Silica dust | 20 | 20 | 15 | 20 |
| Ground Fly ash | 21 | 21 | 29 | 21 |
| Curing | A | A | A | A |
| BT-max wet, MPa | 27.6 | 29.8 | 28.2 | 30.0 |
| BT-max dry, MPa | 31.1 | 29.7 | 31.2 | 29.7 |
| BT wet/BT dry | 0.92 | 1.00 | 0.90 | 1.01 |
| Density wet, $kg/m^3$ | 1344 | 1378 | 1351 | 1311 |
| Density dry, $kg/m^3$ | 1357 | 1355 | 1348 | 1287 |

A: Autoclaving at 160°C

## Table V

| Experiment No. | 14 | 15 (C) |
|---|---|---|
| EO | 6.7 | 6.7 |
| Sandarne K, 21° SR | 3.3 | 3.3 |
| Rapid cement | 65 | 65 |
| Fly ash (unground) | | 20 |
| Ground Fly ash G | 20 | |
| Silica dust | 5 | 5 |
| Filtration time (sec.) | 54 | 32 |
| Curing Procedure | 2 | 2 |
| BT-max wet, MPa | 11.2 | 8.4 |
| Density, kg/m$^3$ | 1327 | 1252 |
| Curing Procedure | 3 | 3 |
| BT-max wet, MPa | 18.5 | 12.6 |
| Density, kg/m$^3$ | 1310 | 1231 |

## Table V (Continued)

| Experiment No. | 16 | 17 (C) |
|---|---|---|
| EO | 6.7 | 6.7 |
| Sandarne K, 21° SR | 3.3 | 3.3 |
| Rapid cement | 75 | 75 |
| Fly ash (unground) | | 10 |
| Ground Fly ash G | 10 | |
| Silica dust | 5 | 5 |
| Filtration time (sec.) | 43 | 32 |
| Curing Procedure | 2 | 2 |
| BT-max wet, MPa | 10.3 | 9.9 |
| Density, kg/m$^3$ | 1293 | 1258 |
| Curing Procedure | 3 | 3 |
| BT-max wet, MPa | 15.6 | 12.6 |
| Density, kg/m$^3$ | 1315 | 1278 |

## Table V (Continued)

| Experiment No. | 18 | 19 (C) |
|---|---|---|
| EO | 6.7 | 6.7 |
| Sandarne K, 21° SR | 3.3 | 3.3 |
| Rapid cement | 60 | 60 |
| Fly ash (unground) | | 20 |
| Ground Fly ash G | 20 | |
| Silica dust | 10 | 10 |
| Filtration time (sec.) | 98 | 46 |
| Curing Procedure | 2 | 2 |
| BT-max wet, MPa | 12.0 | 9.1 |
| Density, $kg/m^3$ | 1312 | 1253 |
| Curing Procedure | 3 | 3 |
| BT-max wet, MPa | 22.1 | 16.3 |
| Density, $kg/m^3$ | 1318 | 1255 |

## Table VI

| Experiment No. | 20 | 21 (C) |
|---|---|---|
| EO | 6.7 | 6.7 |
| Sandarne K, 21° SR | 3.3 | 3.3 |
| Rapid cement | 65 | 65 |
| Fly ash (unground) | | 20 |
| Ground Fly ash G | 20 | |
| Silica dust | 5 | 5 |
| Filtration time (sec.) | 77 | 52 |
| Curing Procedure | 2 | 2 |
| BT-max wet, MPa | 11.6 | 8.9 |
| Density, kg/$m^3$ | 1302 | 1234 |
| Curing Procedure | 3 | 3 |
| BT-max wet, MPa | 20.3 | 12.9 |
| Density, kg/$m^3$ | 1314 | 1251 |

## Table VI (continued)

| Experiment No. | 22 | 23 (C) |
|---|---|---|
| EO | 6.7 | 6.7 |
| Sandarne K, 21° SR | 3.3 | 3.3 |
| Rapid cement | 75 | 75 |
| Fly ash (unground) | | 10 |
| Ground Fly ash G | 10 | |
| Silica dust | 5 | 5 |
| Filtration time (sec.) | 71 | 53 |
| Curing Procedure | 2 | 2 |
| BT-max wet, MPa | 11.7 | 10.8 |
| Density, $kg/m^3$ | 1291 | 1267 |
| Curing Procedure | 3 | 3 |
| BT-max wet, MPa | 16.3 | 14.7 |
| Density, $kg/m^3$ | 1300 | 1271 |

## Table VI (continued)

| Experiment No. | 24 | 25 (C) |
|---|---|---|
| EO | 6.7 | 6.7 |
| Sandarne K, 21° SR | 3.3 | 3.3 |
| Rapid cement | 60 | 60 |
| Fly ash (unground) | | 20 |
| Ground Fly ash G | 20 | |
| Silica dust | 10 | 10 |
| Filtration time (sec.) | 124 | 71 |
| Curing Procedure | 2 | 2 |
| BT-max wet, MPa | 13.2 | 11.3 |
| Density, kg/m$^3$ | 1300 | 1245 |
| Curing Procedure | 3 | 3 |
| BT-max wet, MPa | 27.3 | 20.2 |
| Density, kg/m$^3$ | 1338 | 1251 |

## Table VII

| Experiment No. | H1 | H2 (C) | H3 |
|---|---|---|---|
| EO | 9 | 9 | |
| Stora 32, 40° SR | | | 12 |
| Sandarne K, 20° SR | 3 | 3 | |
| LSC cement | 47 | 47 | 47 |
| Fly ash (unground) | | 21 | |
| Ground Fly ash G | 21 | | 21 |
| Silica dust | 20 | 20 | 20 |
| Curing | A | A | A |
| BT—max wet, MPa | 16.2 | 11.7 | 16.1 |

A: Autoclaving at 160°C

**Claims**

1. A process for the manufacture of asbestos-free fibre-reinforced shaped articles having a density of at least 1000 kg/m³ with a matrix of a cured inorganic binder, in which green shaped articles are formed by dewatering an aqueous slurry of fibres and a matrix forming material comprising particles of an inorganic hydraulic binder, a particulate inorganic additive and possibly other additives containing an excess of water in relation to the amount necessary to secure curing of the hydraulic binder, and containing, on a dry weight basis, 3-20%, preferably 5-20%, in particular 7-15%, cellulose fibres, after which the green shaped articles are cured, **characterized** in that the matrix forming material comprises, on a dry weight basis, 40-90%, preferably 45-85%, of a coarse material with an average particle size of 35-12 μm, preferably 25-18 μm, preferably with a particle size distribution exhibiting only one maximum, comprising the hydraulic binder and possibly a silica- or silicate-containing, preferably pozzolanic active additive,
5-45%, preferably 10-40%, in particular 10-35%, of a fine inorganic, preferably silica- or silicate-containing, in particular pozzolanic active additive with an average particle size of 10-1 μm, preferably 7-3 μm, preferably with a particle size distribution exhibiting only one maximum,
3-25% of an ultra fine preferably pozzolanic active additive with an average particle size within the range 1-0.02 μm, preferably less than 0.5 μm, and
0-30% other additives.

2. A process according to claim 1 wherein the dewatering step is carried out on a Hatschek Machine and the green shaped articles are cured by autoclaving, **characterized** in that the matrix forming material comprises, on a dry weight basis,
40-75%, preferably 40-55%, in particular 45-50%, of the coarse material,
10-45%, preferably 15-40%, in particular 20-30%, of the fine additive,

3-25%, preferably 10-25%, in particular 14-22%, of the ultra fine additive, and

0-30% other additives.

3. A process acording to claim 1 wherein the dewatering step is carried out on a Magnani Machine and the green shaped articles are cured by autoclaving, **characterized** in that the matrix forming material comprises, on a dry weight basis,

40-75%, preferably 40-60%, in particular 45-55%, of the coarse material,

10-45%, preferably 15-40%, in particular 25-35%, of the fine additive,

3-25%, preferably 3-20%, in particular 5-15%, of the ultra fine additive, and

0-30% other additives.

4. A process according to claim 1 wherein the dewatering step is carried out on a Hatschek Machine or a Magnani Machine and the green shaped articles are cured at atmospheric pressure, **characterized** in that the matrix forming material comprises, on a dry weight basis,

50-90%, preferably 60-90%, in particular 65-85%, of the coarse material,

5-35%, preferably 10-30%, in particular 10-20%, of the fine additive,

3-25%, preferably 5-20%, in particular 5-15%, of the ultra fine additive, and

0-30% other additives.

5. A process according to any of the preceeding claims, **characterized** in that the 50-1-$\mu$m-fraction of the coarse material constitutes at least 80% by weight of said material, and that the weight ratio of the 50-10-$\mu$m-fraction to the 10-1-$\mu$m-fraction of this material is larger than 1.0, preferably larger than 1.2.

6. A process according to any of the preceeding claims, **characterized** in that the 50-1-$\mu$m-fraction of the fine additive constitutes at least 80% by weight of said material, and that the weight ratio of the 50-10-$\mu$m-fraction to the 10-1-$\mu$m-fraction of this material is less than 1.0, preferably less than 0.8.

7. A process according to any of the preceeding claims, **characterized** in that at least 80% by weight of the ultra fine additive has a particle size within the range 0.5-0.02 $\mu$m.

8. A process according to any of the preceding claims, **characterized** in that the coarse material is Portland cement, preferably coarsely ground Portland cement having a Blaine-value less than 2500 cm$^2$/g.

9. A process according to any of the preceding claims, **characterized** in that the coarse material comprises a mixture of Portland cement and silica- or silicate-containing, preferably pozzolanic active additive with a weight ratio Portland cement/additive larger than 1, preferably larger than 1.2.

10. A process according to claim 9, **characterized** in that the silica- or silicate-containing additive in the coarse fraction is unground fly ash and/or possibly ground quartz.

11. A process according to any of the preceding claims, **characterized** in that the additive in the fine additive is ground fly ash, possibly ground, possibly calcined moler, ground quartz, kieselgur, rice husk ash, calciumcarbonate or Wollastonite.

12. A process according to any of the preceding claims, **characterized** in that the ultra fine material is fine silica-containing filter dust from electrothermal production of silicon or ferrosilicon with a specific surface area of 5-200 m$^2$/g, preferably about 25 m$^2$/g, and an average particle diameter of about 0.1 $\mu$m.

## Revendications

1. Procédé de fabrication d'articles façonnés renforcés par des fibres, sans amiante, ayant une masse volumique d'au moins 1000 kg/m$^3$, comprenant une matrice d'un liant minéral durci, dans lequel des articles façonnés à l'état vert sont formés par déshydratation d'une suspension aqueuse de fibres et d'une matière formant la matrice, comprenant des particules d'un liant hydraulique minéral, un additif minéral en particules, et facultativement d'autres additifs, contenant un excès d'eau par rapport à la quantité nécessaire pour assurer le durcissement du liant hydraulique, et contenant, sur base pondérale sèche, 3 à 20%, de préférence 5 à 20%, en particulier 7 à 15%, de fibres de cellulose, après quoi les articles façonnés à l'état vert sont durcis, caractérisé en ce que la matière formant la matrice comprend, sur base pondérale sèche,

40 à 90%, de préférence 45 à 85%, d'une matière grossière ayant une dimension granulométrique moyenne de 35 à 12 $\mu$m, de préférence 25 à 18 $\mu$m, avec de préférence une distribution granulométrique ne présentant qu'un seul maximum, comprenant le liant hydraulique et éventuellement un additif actif contenant de la silice ou un silicate, de préférence pouzzolanique,

5 à 45%, de préférence 10 à 40%, en particulier 10 à 35%, d'un additif actif minéral fin contenant de préférence de la silice ou un silicate, en particulier pouzzolanique, ayant une dimension granulométrique moyenne de 10 à 1 $\mu$m, de préférence 7 à 3 $\mu$m, avec de préférence une distribution granulométrique ne présentant qu'un seul maximum,

3 à 25% d'un additif actif ultrafin, de préférence pouzzolanique, ayant une dimension granulométrique

24

moyenne comprise dans l'intervalle de 1 à 0,02 µm, de préférence inférieure à 0,5 µm, et

0 à 30% d'autres additifs.

2. Procédé selon la revendication 1, dans lequel l'étape de déshydratation est exécutée sur une machine Hatschek et les articles façonnés à l'état vert sont durcis par autoclavage, caractérisé en ce que la matière formant la matrice comprend, sur base pondérale sèche,

40 à 75%0, de préférence 40 à 55%, en particulier

45 à 50% de la matière grossière,

10 à 45%, de préférence 15 à 40%, en particulier

20 à 30%, de l'additif fin,

3 à 25%, de préférence 10 à 25%, en particulier 14 à 22%, de l'additif ultrafin, et

0 à 30% d'autres additifs.

3. Procédé selon la revendication 1, dans lequel l'étape de déshydratation est exécutée sur une machine Magnani et les articles façonnés à l'état vert sont durcis par autoclavage, caractérisé en ce que la matière formant la matrice comprend, sur base pondérale sèche,

40 à 75%, de préférence 40 à 60%, en particulier

45 à 55% de la matière grossière,

10 à 45%, de préférence 15 à 40%, en particulier

20 à 356%, de l'additif fin,

3 à 25%, de préférence 3 à 20%, en particulier 5 à 15%, de l'additif ultrafin, et

0 à 30% d'autres additifs.

4. Procédé selon la revendication 1, dans lequel l'étape de déshydratation est exécutée sur une machine Hatschek ou une machine Magnani et les articles façonnés verts sont durcis à la pression atmosphérique, caractérisé en ce que la matière formant la matrice comprend, sur base pondérale sèche,

50 à 90%, de préférence 60 à 90%, en particulier

65 à 85% de la matière grossière,

5 à 35%, de préférence 10 à 30%, en particulier

10 à 20%, de l'additif fin,

3 à 25%, de préférence 5 à 20%, en particulier

5 à 15%, de l'additif ultrafin, et

0 à 30% d'autres additifs.

5. Procédé selon l'une quelconque des revendications précédentes, caractérisé en ce que la fraction de 50 à 1 µm de la matière grossière constitue au moins 80% en poids de ladite matière et en ce que le rapport en poids de la fraction 50 à 10 µm à la fraction de 10 à 1 µm de cette matière est supérieur à 1,0, de préférence supérieur à 1,2.

6. Procédé selon l'une quelconque des revendications précédentes, caractérisé en ce que la fraction de 50 à 1 µm de l'additif fin constitue au moins 80% en poids de ladite matière et en ce que le rapport en poids de la fraction de 50 à 10 µm à la fraction de 10 à 1 µm de cette matière est inférieur à 1,0, de préférence inférieur à 0,8.

7. Procédé selon l'une quelconque des revendications précédentes, caractérisé en ce qu'au moins 80% en poids de l'additif ultrafin a une dimension particulaire s'inscrivant dans l'intervalle de 0,5 à 0,02 µm.

8. Procédé selon l'une quelconque des revendications précédentes, caractérisé en ce que la matière grossière est du ciment Portland, de préférence du ciment Portland grossièrement broyé, ayant une surface spécifique selon Blaine inférieure à 2500 $cm^2/g$.

9. Procédé selon l'une quelconque des revendications précédentes, caractérisé en ce que la matière grossière comprend un mélange de ciment Portland et d'un additif actif contenant de la silice ou un silicate, de préférence pouzzolanique, le rapport en poids du ciment Portland à l'additif étant supérieur à 1, de préférence supérieur à 1,2.

10. Procédé selon la revendication 9, caractérisé en ce que l'additif contenant de la silice ou un silicate contenu dans la fraction grossière est de la cendre volante non broyée et/ou éventuellement du quartz broyé.

11. Procédé selon l'une quelconque des revendications précédentes, caractérisé en ce que l'additif de l'additif fin, est de la cendre volante broyée, du moler facultativement broyé et facultativement calciné, du quartz broyé, du kieselguhr, de la cendre de balles de riz, du carbonate de calcium ou de la wollastonite.

12. Procédé selon l'une quelconque des revendications précédentes, caractérisé en ce que la matière ultrafine est une poussière fine de filtres contenant de la silice, provenant de la production électrothermique de silicium ou de ferrosilicium et ayant une surface spécifique de 5 à 200 $m^2/g$, de préférence d'environ 25 $m^2/g$, et un diamètre moyen de particules d'environ 0,1 µm.

**Ansprüche**

1. Verfahren zur Herstellung von asbestfreien, faserverstärkten, geformten Artikeln einer Dichte von mindestens 1000 kg/m³ mit einer Matrix eines ausgehärteten, anorganischen Binders, wobei frisch geformte Artikel gebildet werden, durch Entwässerung einer wäßrigen Aufschlämmung von Fasern und eines matrixbildenden Materials, umfassend Teilchen eines anorganischen, hydraulischen Binders, einen aus Teilchen bestehenden anorganischen Zusatz und möglicherweise andere Zusätze, die einen Wasserüberschuß im Vergleich zu der Menge enthalten, die erforderlich ist die Aushärtung des hydraulischen Binders sicherzustellen, und auf einer Trockengewichtsbasis 3-20%, vorzugsweise 5-20%, insbesondere 7-15% Zellulosefasern enthaltend, wonach die frisch geformten Artikel ausgehärtet werden, dadurch gekennzeichnet, daß das matrixbildende Material auf einer Trockengewichtsbasis,
40-90%, vorzugsweise 45-85%, eines groben Materials mit einer durchschnittlichen Teilchengröße von 35-12 µm, vorzugsweise 25-18 µm, vorzugsweise mit einer nur ein Maximum zeigenden Teilchengrößenverteilung, das den hydraulischen Binder und möglicherweise einen Silika oder Silikat-enthaltenden, vorzugsweise Puzzolan-aktiven Zusatz enthält,
5-45%, vorzugsweise 10-40%, insbesondere 10-35%, eines feinen anorganischen, vorzugsweise Silika- oder Silikat-enthaltenden, insbesondere Puzzolan-aktiven Zusatzes mit einer durchschnittlichen Teilchengröße von 10-1 µm, vorzugsweise 7-3 µm, vorzugsweise mit einer nur ein Maximum zeigenden Teilchengrößenverteilung,
3-25% eines ultrafeinen, vorzugsweise Puzzolan-aktiven Zusatzes mit einer durchschnittlichen Teilchengröße innerhalb des Bereichs 1-0,02 µm, vorzugsweise kleiner als 0,5 µm, und
0-30% andere Zusätze, umfaßt.

2. Verfahren nach Anspruch 1, worin der Entwässerungsschritt auf einer Hatschek-Maschine ausgeführt wird, und die frisch geformten Artikel durch Behandlung im Autoklaven ausgehärtet werden, dadurch gekennzeichnet, daß das matrixbildende Material auf einer Trockengewichtsbasis,
40-75%, vorzugsweise 40-55%, insbesondere 45-50%, des groben Materials,
10-45%, vorzugsweise 15-40%, insbesondere 20-30%, des feinen Zusatzes,
3-25%, vorzugsweise 10-25%, insbesondere 14-22%, des ultrafeinen Zusatzes, und
0-30% andere Zusätze, umfaßt.

3. Verfahren nach Anspruch 1, worin der Entwässerungsschritt auf einer Magnani-Maschine ausgeführt wird und die frisch geformten Artikel durch Behandlung im Autoklaven ausgehärtet werden, dadurch gekennzeichnet, daß das matrixbildende Material auf einer Trockengewichtsbasis,
40-75%, vorzugsweise 40-60%, insbesondere 45-55%, des groben Materials,
10-45%, vorzugsweise 15-40%, insbesondere 25-35%, des feinen Zusates,
3-25%, vorzugsweise 3-20%, insbesondere 5-15%, des ultrafeinen Zusatzes, und
0-30% andere Zusätze, umfaßt.

4. Verfahren nach Anspruch 1, worin der Entwässerungsschritt auf einer Hatschek-Maschine oder einer Magnani Maschine ausgeführt wird und die frisch geformten Artikel bei Luftdruck ausgehärtet werden, dadurch gekennzeichnet, daß das matrixbildende Material auf einer Trockengewichtsbasis,
50-90%, vorzugsweise 60-90%, insbesondere 65-85%, des groben Materials,
5-35%, vorzugsweise 10-30%, insbesondere 10-20%, des feinen Zusatzes,
3-25%, vorzugsweise 5-20%, insbesondere 5-15%, des ultrafeinen Zusatzes, und
0-30% andere Zusätze, umfaßt.

5. Verfahren nach einem der vorhergehenden Ansprüche, dadurch gekennzeichnet, daß der 50-1 µm-Bruchteil des groben Materials mindestens 80 Gew.-% dieses Materials ausmacht, und daß das Gewichtsverhältnis des 50-10 µm Bruchteils zum 10-1 µm-Bruchteil dieses Materials größer als 1,0, vorzugsweise größer als 1,2 ist.

6. Verfahren nach einem der vorhergehenden Ansprüche, da- , durch gekennzeichnet, daß der 50-1 µm-Bruchteil des feinen Zusatzes mindestens 80 Gew.-% dieses Materials ausmacht, und daß das Gewichtsverhältnis des 50-10 µm Bruchteils zum 10-1 µm-Bruchteil dieses Materials kleiner als 1,0, vorzugsweise kleiner als 0,8 ist.

7. Verfahren nach einem der vorhergehenden Ansprüche, dadurch gekennzeichnet, daß mindestens 80 Gew.-% des ultrafeinen Zusatzes eine Teilchengröße innerhalb des Bereichs 0,5-0,02 µm aufweist.

8. Verfahren nach einem der vorhergehenden Ansprüche, dadurch gekennzeichnet, daß das grobe Material Portland Zement, vorzugsweise grob gemahlener Portland-Zement mit einem Blaine-Wert kleiner als 2500 cm²/g, ist.

9. Verfahren nach einem der vorhergehenden Ansprüche, dadurch gekennzeichnet, daß das grobe Material eine Mischung aus Portland-Zement und einem Silika- oder Silikat- enthaltenden, vorzugsweise Puzzolan-aktiven Zusatz umfaßt, mit einem Gewichtsverhältnis Portland-Zement/Zusatz, das größer als 1, vorzugsweise größer als 1,2 ist.

10. Verfahren nach Anspruch 9, dadurch gekennzeichnet, daß der Silika- oder Silikat-enthaltende Zusatz in dem groben Bruchteil ungemahlene Flugasche und/oder möglicherweise gemahlener Quartz ist.

11. Verfahren nach einem der vorhergehenden Ansprüche, dadurch gekennzeichnet, daß der Zusatz in dem feinen Bruchteil gemahlene Flugasche, möglicherweise gemahlener, möglicherweise geglühter Moler (Diatomeenerde), gemahlener Quartz, Kieselgur, Reiskleienasche, Calciumcarbonat oder Wollastonit ist.

12. Verfahren nach einem der vorhergehenden Ansprüche, dadurch gekennzeichnet, daß das ultrafeine Material feiner Silika-enthaltender Filterstaub aus der elektrothermischen Silicium- oder Ferrosiliciumherstellung ist, mit einem Bereich der spezifischen Oberfläche von 5-200 $m^2$/g, vorzugsweise um 25 $m^2$/g, und einem durchschnittlichen Teilchendurchmesser von ungefähr 0,1 µm.